# NEUE EUROPÄISCHE PATENTSCHRIFT

(11) **EP 3 391 708 B2**
(45) Veröffentlichungstag und Bekanntmachung des Hinweises auf die Entscheidung über den Einspruch: **17.08.2022**
(45) Hinweis auf die Patenterteilung: 18.09.2019
(21) Anmeldenummer: 16808808.6
(22) Anmeldetag: 24.11.2016
(51) Int. Cl.: H05B 6/06, A47J 36/32, A47J 36/34

(54) **UNTERLEGVORRICHTUNG**
PAD DEVICE
DISPOSITIF SOUS-PLAT

(30) Priorität: 17.12.2015 ES 201531830
(43) Veröffentlichungstag der Anmeldung: 24.10.2018
(73) Patentinhaber: BSH Hausgeräte GmbH, 81739 München (DE)
(72) Erfinder: LLORENTE GIL, Sergio, 50009 Zaragoza (ES); MIR BEL, Jorge, 50019 Zaragoza (ES); RIVERA PEMAN, Julio, 50410 Cuarte de Huerva (Zaragoza) (ES)
(86) Internationale Anmeldenummer: PCT/IB2016/057099
(87) Internationale Veröffentlichungsnummer: WO 2017/103712

(56) Entgegenhaltungen:
- EP-A1- 0 693 127
- EP-A1- 2 662 004
- EP-A1- 2 662 004
- EP-A1- 2 693 127
- EP-A1- 3 336 437
- WO-A1-2009/143199
- DE-A1-102007 031 687
- DE-A1-102009 058 271
- DE-A1-102011 000 278
- JP-A- S63 269 488
- JP-A- S63 269 488
- US-A- 3 742 179
- US-A1- 2009 095 736

## Beschreibung

Die Erfindung betrifft eine Unterlegvorrichtung nach dem Oberbegriff des Patentanspruchs 1.

Aus der WO 2009/143199 A1 ist bereits eine Unterlegvorrichtung bekannt, welche zu einem Auflegen auf einer Aufstellplatte vorgesehen ist. Die Aufstellplatte ist Teil eines Kochfelds und als eine Kochfeldplatte ausgebildet. Eine Unterlegeinheit der Unterlegvorrichtung ist in einem Heizbetriebszustand zwischen der Aufstellplatte und einem beheizten Gargeschirr angeordnet. Eine Elektronikeinheit ist in dem Kochfeld integriert und einstückig mit einer Kochfeld-Steuereinheit des Kochfelds ausgebildet.

Die Druckschrift JPS63269488 A offenbart eine Unterlegvorrichtung mit zumindest einer Unterlegeinheit, welche dazu vorgesehen ist, in wenigstens einem Heizbetriebszustand zwischen einer Aufstellplatte und einem beheizten Gargeschirr wenigstens teilweise angeordnet zu sein, und mit einer Elektronikeinheit, welche dazu vorgesehen ist, in wenigstens einem Betriebszustand zumindest eine Funktion bereitzustellen.
Die Druckschrift US 2009/0095736A1 offenbart eine Unterlegvorrichtung mit zumindest einer Unterlegeinheit, welche dazu vorgesehen ist, in wenigstens einem Heizbetriebszustand zwischen einer Aufstellplatte und einem beheizten Gargeschirr wenigstens teilweise angeordnet zu sein, und mit einer Elektronikeinheit, welche dazu vorgesehen ist, in wenigstens einem Betriebszustand zumindest eine Funktion bereitzustellen, wobei die Elektronikeinheit zumindest eine Positionierungseinheit aufweist, welche dazu vorgesehen ist, zumindest eine Position der Unterlegeinheit auf der Aufstellplatte zu detektieren.

Die Aufgabe der Erfindung besteht insbeson-dere darin, eine gattungsgemäße Vorrichtung mit ver-besserten Eigenschaften hinsichtlich einer hohen Flexi-bilität bereitzustellen. Die Aufgabe wird erfindungsge-mäß durch die Merkmale des Patentanspruchs 1 gelöst, während vorteilhafte Ausgestaltungen und Weiterbildun-gen der Erfindung den Unteransprüchen entnommen werden können.

Die Erfindung geht aus von einer Unterlegvorrichtung mit zumindest einer Unterlegeinheit, welchedazu vorgesehen ist, in wenigstens einem Heizbetriebszustand zwischen einer Aufstellplatte und einem beheizten Gargeschirrwenigstensteilweiseangeordnetzusein. Es wird vorgeschlagen, dass die Unterlegvorrichtung eine Elektronikeinheit aufweist, welche dazu vorgesehen ist, in wenigstens einem Betriebszustand, insbesondere zumindest in dem Heizbetriebszustand, zumindest eine Funktion bereitzustellen. Unter einer "Unterlegvorrichtung" soll eine Vorrichtung verstanden werden, welche zu einem Auflegen, zu einer Platzierung, aufderAufstellplatte und zu einem Aufstellen zumindest eines Gargeschirrs vorgesehen ist und welche insbesondere in dem Heizbetriebszustand eine Unterlage für das beheizte Gargeschirr wenigstens teilweise ausbildet. In einer Einbaulage ist die Unterlegvorrichtung insbesondere zu einer Platzierung oberhalb eines Kochfelds vorgesehen. Insbesondere ist die Unterlegvorrichtung Teil eines Kochsystems. Das Kochsystem weist insbesondere das Kochfeld auf. Unter einem "Kochfeld" soll insbesondere eine Einheit verstanden werden, welche zumindest eine Heizeinheitund eineVersorgungseinheitund eine Kochfeld-Steuereinheit aufweist, welche insbesondere dazu vorgesehen ist, in dem Heizbetriebszustand die Versorgungse inheit ins besondere zu einer Versorgung der Heizeinheit mit Energie, insbesondere mit elektrischer Energie, anzusteuern, wobei die Heizeinheit in dem Heizbetriebszustand inAbhängigkeiteinerVersorgung durch die Versorgungs einheit ins besondere zu einer Bereitstellung von Energie, insbesondere von elektromagnetischerEnergie,anwenigstenseinGargeschirr, insbesonderean dasGargeschirr, vorgesehen ist. Beispielsweise könnte das Kochfeld zumindest eine Kochfeldplatte aufweisen. Alternativ könnte das Kochfeld frei von einer Kochfeldplatte sein. Insbesondere ist die Unterlegvorrichtung als eine separate Einheit ausgebildet, wodurch insbesondere eine hohe Flexibilität erreicht werden kann. Insbesondere kann eine Unterlegeinheit der als separate Einheit ausgebildeten Unterlegvorrichtung an einer beliebigen Position auf der Aufstellplatte positioniert werden. Die Unterlegvorrichtung ist insbesondere von dem Kochfeld verschieden und vorteilhaft relativ zu dem Kochfeld beweglich. Insbesondere ist die Unterlegvorrichtung zu einer Verwendung mit dem Kochfeld und vorzugsweise mit verschiedenen Kochfeldern vorgesehen. Das Kochfeld ist insbesondere zu einer Verwendung mit zumindest einer Unterlegvorrichtung und vorteilhaft wenigstens im Wesentlichen zeitgleich mit zumindest zwei, vorteilhaft mit zumindest drei und vorzugsweise mit zumindest vier Unterlegvorrichtungen vorgesehen. Unter einer "Heizeinheit" soll in diesem Zusammenhang insbesondere eine Einheit verstanden werden, welche dazu vorgesehen ist, Energie, vorzugsweise elektrische Energie, in Wärme umzuwandeln und insbesondere zumindest einem Gargeschirr zuzuführen. Vorteilhaft ist die Heizeinheit als Induktionsheizeinheit ausgebildet. Insbesondere bildet die Unterlegeinheit die Unterlage für das beheizte Gargeschirr wenigstens im Wesentlichen aus. Die Unterlegeinheit weist insbesondere eine wenigstens im Wesentlichen plattenförmige Gestalt auf. Insbesondere weist die Unterlegeinheit eine Dicke auf, welche insbesondere senkrecht zu einer Haupterstreckungsebene der Unterlegeinheit ausgerichtet ist und insbesondere einen Wert von maximal 10%, insbesondere von maximal 7%, vorteilhaft von maximal 5%, besonders vorteilhaft von maximal 3 %, vorzugsweise von maximal 2 % und besonders bevorzugt von maximal 1,2% einer wenigstens im Wesentlichen parallel zu der Haupterstreckungsebene der Unterlegeinheit ausgerichteten maximalen Erstreckung der Unterlegeinheit aufweist. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Beispielsweise könnte zumindest die Unterlegeinheit, und insbesondere zusätzlich zumindest ein Abstandselement und/oder eine Griffeinheit, als eine Matte ausgebildet sein. Die Dicke der Unterlegeinheit, vorteilhaft der Unterlegvorrichtung, ist in dem Heizbetriebszustand insbesondere wenigstens im Wesentlichen senkrecht zu der Aufstellplatte ausgerichtet. Beispielsweise könnte die Unterlegeinheit eine wenigstens im Wesentlichen n-eckige, wie beispielsweise eine quadratische und/oder rechteckige, und/oder ovale, wie beispielsweise eine ellipsenförmige, Gestalt aufweisen. Vorteilhaft weist die Unterlegeinheit eine wenigstens im Wesentlichen kreisförmige und/oderscheibenförmige Gestaltauf. Insbesondere weistdie Unterlegeinheit einen Durchmesser in einem Bereich von 120 mm bis 320 mm, insbesondere von 140 mm bis 280 mm, vorteilhaft von 160 mm bis 240 mm und vorzugsweise von 180 mm bis 210 mm auf. Insbesondere weist die Unterlegeinheit eine Dicke in einem Bereich von 0,5 mm bis 3,5 mm, insbesondere von 1 mm bis 3 mm, vorteilhaft von 1,5 mm bis 2,5 mm und vorzugsweise von 1,75 mm bis 2,25 mm auf. Insbesondere könnte die Unterlegeinheit zumindest eine Ausnehmung und vorteilhaft zumindest einen Hohlraum aufweisen, welche/welcher insbesondere zu einer Aufnahme wenigstens eines Teils der Elektronikeinheit vorgesehen sein könnte. Die Unterlegeinheit ist insbesondere dazu vorgesehen, in dem Heizbetriebszustand die Aufstellplatte und das beheizte Gargeschirr insbesondere physikalisch voneinander zu beabstanden. Insbesondere ist die Unterlegeinheit dazu vorgesehen, in dem Betriebszustand eine Verbindung zwischen dem beheizten Gargeschirr und der Aufstellplatte wenigstens im Wesentlichen herzustellen und/oder zumindest an einer Verbindung zwischen dem beheizten Gargeschirr und der Aufstellplatte mitzuwirken. Die Unterlegeinheit ist insbesondere zu einem Aufstellen von verschiedenen Gargeschirren vorgesehen. Beispielsweise könnte die Unterlegeinheit zu einem Aufstellen von Gargeschirren verschiedener Größe und/oder verschiedenen Durchmessers vorgesehen sein. Die Unterlegeinheit könnte insbesondere zu einem Aufstellen von Gargeschirr mit einem Durchmesser vorgesehen sein, welcher insbesondere größer ist als ein Durchmesser der Unterlegeinheit. Der Betriebszustand könnte insbesondere zeitlich vor dem Heizbetriebszustand und/oder mit dem Heizbetriebszustand wenigstens teilweise überlappend angeordnet sein. Unter einem "Heizbetriebszustand" soll insbesondere ein Zustand verstanden werden, in welchem insbesondere eine Beheizung des Gargeschirrs erfolgt. Insbesondere stellt in dem Heizbetriebszustand ein unterhalb der Aufstellplatte angeordnetes Kochfeld eine Heizenergie bereit. Das Kochfeld weist insbesondere zumindest eine Heizeinheit auf, welche insbesondere dazu vorgesehen ist, die Heizenergie bereitzustellen. Das Kochfeld weist insbesondere eine Kochfeld-Steuereinheit auf, welche insbesondere dazu vorgesehen ist, in dem Heizbetriebszustand eine Energiezufuhr zu der Heizeinheit zu steuern und/oder zu regeln. Insbesondere ist in dem Heizbetriebszustand zumindest die Unterlegeinheit auf der Aufstellplatte aufgelegt. Unter einer "Aufstellplatte" soll eine Einheit verstanden werden, die in wenigstens einem Betriebszustand, insbesondere zumindest in dem Heizbetriebszustand, zu einem Aufstellen von Gargeschirr und/oder zu einem Auflegen der Unterlegeinheit vorgesehen ist. Die Aufstellplatte könnte beispielsweise eine Arbeitsplatte, insbesondere eine Küchenarbeitsplatte, und/oder eine Kochfeldplatte sein. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Außengehäuses, insbesondere des Kochfelds, auszubilden. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Unter einer "Arbeitsplatte" soll insbesondere eine Einheit verstanden werden, auf welcher insbesondere eine Vorbereitung und/oder eine Bearbeitung von Lebensmitteln erfolgt und/oder welche insbesondere zu einer Ablage und/oder zu einem Aufstellen von wenigstens einer Arbeitsutensilie, insbesondere einer Küchenutensilie, vorgesehen ist. Die Arbeitsutensilie könnte beispielsweise ein Gargeschirr und/oder eine Backform und/oder eine Schüssel und/oder ein Küchengerät und/oder ein Messer und/oder ein Löffel und/odereine Gabel und/oder ein Küchengeschirr und/oder ein Backgeschirr und/oder ein Zubereitungsbrett und/oder ein Küchenarbeitsbrett, wie beispielsweise ein Schneidebrett, sein. Die Aufstellplatte könnte insbesondere wenigstens zu einem Großteil aus Schichtstoff und/oder aus Laminat und/oder aus Naturstein und/oder aus Kunststein und/oder aus Mineralwerkstoff und/oder aus Massivholz und/oder aus Echtholz und/oder aus Keramik und/oder aus Beton und/oder aus Glas bestehen. Unter einer "Elektronikeinheit" soll insbesondere eine Einheit verstanden werden, welche zumindest ein elektrisches und/oder elektronisches Bauteil aufweist und/oder welche zumindest eine elektrische und/oder elektronische Einheit aufweist. Das elektrische und/oder elektronische Bauteil könnte beispielsweise ein elektrisches Widerstandsbauteil und/oder ein Sender und/oder ein Sensor und/oder ein Empfänger und/oder eine Spule und/oder eine Diode und/oder eine Kapazität sein. Die elektrische und/oder elektronische Einheit könnte beispielsweise eine Bedieneinheit und/oder eine Steuereinheit und/oder eine Kommunikationseinheit sein. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere eine hohe Flexibilität erreicht werden. Insbesondere kann eine Unabhängigkeit der Unterlegvorrichtung von einer Kochfeld-Steuereinheit ermöglicht werden. Ein hoher Komfort für einen Bediener kann insbesondere bereitgestellt werden. Im Fall einer als Arbeitsplatte ausgebildeten Aufstellplatte kann insbesondere eine leichte Reinigbarkeit erzielt werden.

Beispielsweise könnte die Unterlegeinheit aus zumindest einem magnetischen, insbesondere aus zumindest einem ferromagnetischen Material bestehen und insbesondere dazu vorgesehen sein, eine Beheizung eines induktionsuntauglichen und/oder nicht-magnetischen, insbesondere nicht-ferromagnetischen Gargeschirrs mittels einer als Induktionsheizeinheit ausgebildeten Heizeinheit des Kochfelds zu ermöglichen. Vorzugsweise ist die Unterlegeinheit dazu vorgesehen, in dem Heizbetriebszustand eine Übertragung von Wärme von dem Gargeschirr auf die Aufstellplatte wenigstens im Wesentlichen zu verhindern. Insbesondere ist die Unterlegeinheit dazu vorgesehen, in dem Heizbetriebszustand zumindest eine Wärmeisolation und/oder eine Wärmesenke bereitzustellen. Die Unterlegeinheit weist insbesondere ein wärmeisolierendes Material und/oder ein Material mit einer relativ hohen spezifischen Wärmekapazität auf und besteht vorzugsweise wenigstens zu einem Großteil aus dem Material. Beispielsweise könnte die Unterlegeinheit wenigstens zu einem Großteil aus Gummi und/oder aus Silikon bestehen. Vorteilhaft besteht die Unterlegeinheit wenigstens zu einem Großteil aus einem Material mit einer spezifischen Wärmekapazität von mindestens 800 J/(kg*K), insbesondere von mindestens 1000 J/(kg*K), vorteilhaft von mindestens 1200 J/(kg*K), besonders vorteilhaft von mindestens 1400 J/(kg*K), vorzugsweise von mindestens 1500 J/(kg*K) und vorzugsweise von mindestens 1600 J/(kg*K). Alternativ oder zusätzlich besteht die Unterlegeinheit wenigstens zu einem Großteil aus einem Material mit einer Wärmeleitfähigkeit von maximal 1 W/(m*K), insbesondere von maximal 0,8 W/(m*K), vorteilhaft von maximal 0,5 W/(m*K), besonders vorteilhaft von maximal 0,3 W/(m*K), vorzugsweise von maximal 0,2 W/(m*K) und vorzugsweise von maximal 0,16 W/(m*K). Dadurch kann insbesondere eine insbesondere durch hohe Temperaturgradienten verursachte Beschädigung der Aufstellplatte, insbesondere einer Oberfläche der Aufstellplatte, vermieden und/oder eine langlebige Ausgestaltung erzielt werden, wodurch die Aufstellplatte insbesondere wenigstens zu einem Großteil aus zumindest einem hochwertigen Material bestehen kann. Insbesondere kann eine hohe Betriebssicherheit bereitgestellt und/oder eine Erwärmung der Unterlegvorrichtung vermieden werden. Zudem wird vorgeschlagen, dass die Unterlegeinheit wenigstens zu einem Großteil aus einem im Wesentlichen flexiblen und/oder elastischen Material besteht. Das Material könnte beispielsweise Gummi und/oder Silikon sein. Dadurch kann insbesondere eine optimale Anpassung an eine Form des beheizten Gargeschirrs und/oder an eine Form der Aufstellplatte erzielt werden. Insbesondere kann ein hoher Komfort für einen Bediener erreicht und/oder eine Beschädigung der Aufstellplatte vermieden werden. Insbesondere kann insbesondere eine geringe Gefahr einer Beschädigung der Unterlegvorrichtung, beispielsweise im Fall eines Herunterfallens auf einen Untergrund, erreicht werden. Beispielsweise könnte die Kochfeld-Steuereinheit zu einer Detektion einer Position der Unterlegeinheit auf der Aufstellplatte vorgesehen sein. Alternativ oder zusätzlich könnte das Kochsystem, welches insbesondere die Unterlegvorrichtung und das Kochfeld aufweisen könnte, zumindest eine System-Positionierungseinheit aufweisen, welche insbesondere dazu vorgesehen sein könnte, eine Position der Unterlegeinheit auf der Aufstellplatte wenigstens im Wesentlichen zu detektieren. Die System-Positionierungseinheit könnte insbesondere zumindest eine Bildaufnahmeeinheit, wie beispielsweise eine Kamera, aufweisen und beispielsweise in einer Dunstabzugseinheit angeordnet sein. Gemäß der Erfindung weist die Elektronikeinheit zumindest eine Positionierungseinheit auf, welche dazu vorgesehen ist, zumindest eine Position der Unterlegeinheit auf der Aufstellplatte wenigstens zu detektieren. Die Positionierungseinheit könnte beispielsweise zumindest einen Beschleunigungssensor aufweisen, welcher zu der Detektion der Position der Unterlegeinheit auf der Aufstellplatte vorgesehen sein könnte. Insbesondere könnte der Beschleunigungssensor kalibriert sein, beispielsweise werksseitig und/oder bei einer erstmaligen Benutzung durch einen Bediener und/oder vor einer jeden Verwendung durch einen Bediener und/oder vor einer Durchführung des Heizbetriebszustands. Insbesondere könnte der Beschleunigungssensor dazu vorgesehen sein, zu der Kalibration ausgehend von einer bestimmten, insbesondere vordefinierten, ersten Position zu einer bestimmten, insbesondere vordefinierten, zweiten Position bewegt zu werden. Die Positionierungseinheit könnte insbesondere dazu vorgesehen sein, die Kalibration des Beschleunigungssensors zu speichern und insbesondere auf Basis der Kalibration des Beschleunigungssensors eine Position des Beschleunigungssensors zu ermitteln. Insbesondere könnte die Positionierungseinheit eine Speichereinheit aufweisen, in welcher die Positionierungseinheit insbesondere die Kalibration des Beschleunigungssensors speichern könnte. Insbesondere könnte in der Speichereinheit der Positionierungseinheit zumindest eine Position der Heizeinheit des Kochfelds gespeichert sein. Alternativ oder zusätzlich könnte die Positionierungseinheit zumindest einen RFID-Transponder aufweisen, welcher insbesondere dazu vorgesehen sein könnte, die Position der Unterlegeinheit auf der Aufstellplatte wenigstens im Wesentlichen zu detektieren. Die Positionierungseinheit könnte alternativ oder zusätzlich dazu vorgesehen sein, die Position der Unterlegeinheit auf der Aufstellplatte mittels Triangulation wenigstens im Wesentlichen zu detektieren. Die Elektronikeinheit könnte insbesondere eine Ausgabeeinheit aufweisen, welche insbesondere zu einer akustischen und/oder optischen und/oder haptischen Ausgabe zumindest eines Signals, insbesondere eines Warnsignals, vorgesehen sein könnte. Die Ausgabeeinheit könnte insbesondere zumindest ein Leuchtmittel, wie beispielsweise eine LED, aufweisen, welches insbesondere zu der Ausgabe des Signals, insbesondere des Warnsignals, vorgesehen sein könnte. Insbesondere könnte die Ausgabeinheit dazu vorgesehen sein, im Fall einer Fehl-Positionierung der Unterlegeinheit, insbesondere bei einer Positionierung der Unterlegeinheit außerhalb eines dafür vorgesehenen Bereichs, das Warnsignal auszugeben. Die Ausgabeeinheit könnte insbesondere eine dynamische Ausgabeeinheit und insbesondere dazu vorgesehen sein, das Warnsignal insbesondere mittels zumindest eines Geräuschs und/oder mittels zumindest eines Lichtsignals ausgeben. Alternativ oder zusätzlich könnte die Ausgabeeinheit insbesondere eine statische Ausgabeeinheit und insbesondere dazu vorgesehen sein, einen für eine Positionierung der Unterlegeinheit vorgesehenen Bereich mittels einer insbesondere in der Aufstellplatte eingebrachten Markierung zu markieren. Vorteilhaft ist die Unterlegeinheit zu einer Positionierung an einer beliebigen Stelle auf der Aufstellplatte oberhalb des Kochfelds vorgesehen. Beispielsweise könnte die Elektronikeinheit zumindest eine Speichereinheit aufweisen, in welcher insbesondere eine Größe und/oder Abmessung einer Kochfläche gespeichert sein könnte. Insbesondere könnte die Positionierungseinheit auf die Kochfläche kalibriert sein. Die Elektronikeinheit könnte insbesondere dazu vorgesehen sein, insbesondere mittels der Anzeigeeinheit zumindest eine Positionierungshilfe auszugeben, um insbesondere eine Positionierung zumindest der Unterlegeinheit auf der Kochfläche zu gewährleisten. Dadurch kann insbesondere auf eine Kochfeld-Positionierungseinheit verzichtet werden.

Ferner wird vorgeschlagen, dass die Elektronikeinheit zumindest einen Temperatursensor aufweist, welcher dazu vorgesehen ist, in dem Heizbetriebszustand zumindest eine Temperatur des Gargeschirrs zu detektieren. Insbesondere ist die Elektronikeinheit dazu vorgesehen, in dem Heizbetriebszustand eine Detektion einer Temperatur des Gargeschirrs bereitzustellen. Unter einem "Sensor" soll insbesondere zumindest ein Element verstanden werden, das zumindest einen Detektor zu einer Detektion wenigstens einer Sensorkenngröße aufweist und das dazu vorgesehen ist, einen die Sensorkenngröße kennzeichnenden Wert auszugeben, wobei es sich bei der Sensorkenngröße vorteilhaft um eine physikalische und/oder chemische Größe handelt. Beispielsweise könnte der Temperatursensor dazu vorgesehen sein, in Abhängigkeit von einer Temperatur seinen Widerstand zu ändern. Alternativ oder zusätzlich könnte der Temperatursensor dazu vorgesehen sein, in Abhängigkeit von einer Temperatur zumindest eine elektrische Eigenschaft, wie insbesondere eine Spannung und/oder eine Stromleitfähigkeit, zu ändern. Der Temperatursensor könnte beispielsweise ein Kontaktsensor und/oder ein Infrarot-Sensor und/oder ein Widerstandssensor, wie beispielsweise ein NTC-Widerstand und/oder ein PTC-Widerstand, sein. Insbesondere ist der Temperatursensor wenigstens zu einem Großteil in der Unterlegeinheit angeordnet. Die Unterlegeinheit weist insbesondere zumindest ein Detektionsfenster auf, welches insbesondere dazu vorgesehen ist, eine Detektion einer Temperatur durch den Temperatursensor zu ermöglichen. Insbesondere ist der Temperatursensor wenigstens zu einem Großteil unterhalb des Detektionsfensters der Unterlegeinheit und/oder zumindest in einem Nahbereich des Detektionsfensters der Unterlegeinheit angeordnet. Alternativ oder zusätzlich könnte die Unterlegvorrichtung insbesondere zumindest einen Wellenleiter aufweisen, welcher insbesondere dazu vorgesehen sein könnte, Infrarot-Strahlung von dem Detektionsfenster zu dem Temperatursensor zu leiten, welcher insbesondere zu dem Detektionsfenster beabstandet angeordnet sein könnte. Das Detektionsfenster könnte insbesondere wenigstens zu einem Großteil durchlässig für Wärmestrahlung und/oder für Infrarotstrahlung sein. Alternativ oder zusätzlich könnte das Detektionsfenster insbesondere eine höhere Wärmeleitfähigkeit aufweisen als restliche Bereiche der Unterlegeinheit und insbesondere zu einer Wärmeleitung, insbesondere von von dem Gargeschirr ausgehender Wärme zu dem Temperatursensor, vorgesehen sein. Dadurch kann insbesondere ein hoher Komfort für einen Bediener und/oder ein hoher Informationsgrad erzielt werden. Insbesondere kann die Möglichkeit zu einer Durchführung eines automatischen Garprozesses geschaffen werden. Durch eine geringere Entfernung eines Temperatursensors zu dem Gargeschirr kann insbesondere eine optimale Detektion der Temperatur des Gargeschirrs ermöglicht werden.

Zudem wird vorgeschlagen, dass die Elektronikeinheit zumindest eine Bedieneinheit aufweist, welche zu einer Bedieneingabe von zumindest einem Betriebsparameter vorgesehen ist. Insbesondere ist die Elektronikeinheit dazu vorgesehen, in dem Betriebszustand eine Eingabefunktion zumindest eines Betriebsparameters bereitzustellen. Unter einer "Bedieneinheit" soll insbesondere eine elektrische und/oder elektronische Einheit verstanden werden, welche insbesondere zu einer Entgegennahme eines Bediensignals und insbesondere zu einer Verarbeitung des Bediensignals vorgesehen ist. Insbesondere ist die Bedieneinheit dazu vorgesehen, bei der Verarbeitung des Bediensignals das Bediensignal zumindest zu identifizieren und/oder das Bediensignal an eine Steuereinheit weiterzuleiten. Die Bedieneinheit ist insbesondere zu einer Eingabe von Betriebsparametern und/oder zu einer Auswahl von Betriebsparametern vorgesehen. Der Betriebsparameter könnte beispielsweise eine Heizleistung und/oder eine Heizleistungsdichte und/oder eine Heizleistungsstufe und/oder eine Heizzone sein. Beispielsweise könnte die Bedieneinheit zu einer Ausgabe eines Werts eines Betriebsparameters an einen Bediener vorgesehen sein. Dadurch kann insbesondere auf eine Kochfeld-Bedieneinheit verzichtet und/oder eine komfortable Ausgestaltung erreicht werden. Ist die Bedieneinheit insbesondere zu einer Ausgabe eines Werts eines Betriebsparameters an einen Bediener vorgesehen, kann insbesondere auf eine Kochfeld-Ausgabeeinheit, insbesondere auf Verstärker und/oder auf Tonausgabeelemente, verzichtet werden.

Beispielsweise könnte die Bedieneinheit dazu vorgesehen sein, bei der Verarbeitung des Bediensignals das Bediensignal zumindest zu identifizieren und insbesondere zumindest eine Aktion zu einer Verwirklichung des Bediensignals einzuleiten. Vorteilhaft ist die Bedieneinheit dazu vorgesehen, insbesondere zu der Verwirklichung des Bediensignals, das Bediensignal an eine Steuereinheit der Elektronikeinheit weiterzuleiten. Vorzugsweise weist die Elektronikeinheit eine Steuereinheit auf, welche dazu vorgesehen ist, in Abhängigkeit von der Bedieneingabe in dem Heizbetriebszustand wenigstens einen Garprozess zu steuern und/oder zu regeln. Die Elektronikeinheit weist insbesondere zumindest eine Kommunikationseinheit auf, welche insbesondere zu einer Kommunikation mit der Kochfeld-Steuereinheit vorgesehen ist. Insbesondere ist die Elektronikeinheit dazu vorgesehen, mittels der Steuereinheit die Kochfeld-Steuereinheit anzusteuern und insbesondere eine Ansteuerung der Heizeinheit einzuleiten. Die Kochfeld-Steuereinheit ist insbesondere dazu vorgesehen, in Abhängigkeit einer Ansteuerung durch die Steuereinheit der Elektronikeinheit die Versorgungseinheit anzusteuern, welche insbesondere zu einer Versorgung der Heizeinheit mit Energie, insbesondere mit elektrischer Energie vorgesehen ist, um insbesondere den Garprozess zu bewirken. Unter einem "Garprozess" soll insbesondere ein Vorgang verstanden werden, in welchem die Heizeinheit dem auf der Unterlegeinheit aufgestellten Gargeschirr insbesondere Energie, vorteilhaft in Form von elektromagnetischer Energie, zuführt. Der Garprozess erfolgt insbesondere in dem Heizbetriebszustand. Beispielsweise könnte der Garprozess Braten und/oder Kochen und/oder Dampfgaren und/oder Dünsten und/oder Garziehen und/oder Druckgaren und/oder Niedertemperaturgaren und/oder Vakuumgaren und/oder Sautieren und/oder Grillen und/oder Frittieren und/oder Schmoren und/oder Pochieren und/oder Backen umfassen. Unter einer "Steuereinheit" soll insbesondere eine elektronische Einheit verstanden werden, die eine Recheneinheit und insbesondere zusätzlich zur Recheneinheit eine Speichereinheit mit einem darin gespeicherten Betriebsprogramm aufweist, das dazu vorgesehen ist, von der Recheneinheit ausgeführt zu werden. Unter einer "Kochfeld-Steuereinheit" soll insbesondere eine elektronische Einheit verstanden werden, die vorzugsweise in einer Steuer- und/oder Regeleinheit des Kochfelds zumindest teilweise integriert ist und die vorzugsweise dazu vorgesehen ist, die Versorgungseinheit, welche insbesondere zu einer Versorgung der Heizeinheit vorgesehen ist, zu steuern und/oder zu regeln. Dadurch kann die Steuereinheit insbesondere Aufgaben der Kochfeld-Steuereinheit wenigstens zu einem Großteil übernehmen, wodurch insbesondere gesteigerte Bedienmöglichkeiten erreicht werden können.

Ferner wird vorgeschlagen, dass die Unterlegvorrichtung zumindest ein Abstandselement aufweist, welches dazu vorgesehen ist, die Bedieneinheit von der Unterlegeinheit zu beabstanden. Das Abstandselement ist insbesondere bei einer Betrachtung in einer Draufsicht wenigstens im Wesentlichen stabförmig ausgebildet. Insbesondere weist das Abstandselement eine Längserstreckung von mindestens 100 mm, insbesondere von mindestens 120 mm, vorteilhaft von mindestens 140 mm und vorzugsweise von mindestens 150 mm auf. Insbesondere weist das Abstandselement eine Dicke in einem Bereich von 0,5 mm bis 3,5 mm, insbesondere von 1 mm bis 3 mm, vorteilhaft von 1,5 mm bis 2,5 mm und vorzugsweise von 1,75 mm bis 2,25 mm auf. Insbesondere ist die Unterlegeinheit an einer ersten Seite des Abstandselements angeordnet. Die Bedieneinheit ist insbesondere an einer zweiten Seite des Abstandselements angeordnet. Das Abstandselement ist insbesondere dazu vorgesehen, die Bedieneinheit um eine Strecke von mindestens 50 mm, insbesondere von mindestens 80 mm, vorteilhaft von mindestens 100 mm, besonders vorteilhaft von mindestens 130 mm und vorzugsweise von mindestens 150 mm von der Unterlegeinheit zu beabstanden. Insbesondere sind das Abstandselement und die Unterlegeinheit vorzugsweise einstückig miteinander verbunden. Das Abstandselement und die Unterlegeinheit weisen einen ersten Kontaktpunkt auf. Das Abstandselement weist insbesondere eine Längserstreckungsrichtung auf, welche insbesondere wenigstens im Wesentlichen senkrecht zu einer Tangente an den ersten Kontaktpunkt ausgerichtet ist. Insbesondere ist das Abstandselement dazu vorgesehen, eine Wärmeisolation, insbesondere zusätzlich zu einer von der Unterlegeinheit bereitgestellten Wärmeisolation, bereitzustellen. Dadurch kann insbesondere ein hoher Komfort für einen Bediener und/oder eine hohe Bediensicherheit erreicht werden. Insbesondere kann eine Bedieneingabe mittels der Bedieneinheit zu jeder Zeit, insbesondere auch während des Heizbetriebszustands, ungehindert vorgenommen werden. Ein Bediener kann insbesondere optimal vor Verbrennungen geschützt werden. Insbesondere kann eine hohe Wärmeisolation bereitgestellt werden.

Zudem wird vorgeschlagen, dass die Unterlegvorrichtung eine Griffeinheit aufweist, welche mit der Unterlegeinheit verbunden ist. Beispielsweise könnte die Griffeinheit seitlich an der Unterlegeinheit angeordnet sein. Vorteilhaft ist die Griffeinheit beabstandet zu der Unterlegeinheit angeordnet und insbesondere mittels des Abstandselements mit der Unterlegeinheit verbunden. Insbesondere sind die Griffeinheit und die Unterlegeinheit einstückig miteinander verbunden. Insbesondere sind die Griffeinheit und das Abstandselement einstückig miteinander verbunden. Die Griffeinheit weist bei Betrachtung in einer Draufsicht insbesondere eine wenigstens im Wesentlichen stabförmige Gestalt auf. Insbesondere weist die Griffeinheit eine Quererstreckung in einem Bereich von 5 mm bis 55 mm, insbesondere von 10 mm bis 50 mm, vorteilhaft von 150 mm bis 45 mm und vorzugsweise von 20 mm bis 40 mm auf. Insbesondere weist die Unterlegeinheit eine Dicke in einem Bereich von 2 mm bis 35 mm, insbesondere von 3 mm bis 30 mm, vorteilhaft von 4 mm bis 25 mm und vorzugsweise von 5 mm bis 20 mm auf. Insbesondere sind eine Längserstreckungsrichtung der Griffeinheit und eine Längserstreckungsrichtung des Abstandselements wenigstens im Wesentlichen senkrecht zueinander ausgerichtet. Insbesondere ist die Bedieneinheit wenigstens zu einem Großteil in der Griffeinheit angeordnet und/oder in der Griffeinheit integriert. Die Unterlegvorrichtung könnte insbesondere zumindest ein Bedienelement aufweisen, das zu einer Eingabe von Betriebsparametern und/oder zu einer Auswahl von Betriebsparametern vorgesehen sein könnte. Das Bedienelement könnte insbesondere einstückig mit der Griffeinheit und insbesondere als in der Griffeinheit angeordnete Taste und/oder als in der Griffeinheit angeordneter Touch-Slider ausgebildet sein. Unter einer "Griffeinheit" soll insbesondere eine Einheit verstanden werden, welche dazu vorgesehen ist, zu einer Bewegung zumindest der Unterlegeinheit von einem Bediener betätigt, insbesondere angefasst und/oder berührt, zu werden. Dadurch kann insbesondere eine einfache Handhabung der Unterlegvorrichtung ermöglicht werden.

Die Elektronikeinheit weist erfindungsgemäß eine Gargeschirrerkennungseinheit auf, welche dazu vorgesehen ist, auf der Unterlegeinheit aufgestelltes Gargeschirr zu detektieren. Die Gargeschirrerkennungseinheit ist wenigstens zu einem Großteil in der Unterlegeinheit integriert. Beispielsweise könnte die Gargeschirrerkennungseinheit zumindest einen Sensor aufweisen, welcher dazu vorgesehen sein könnte, ein, insbesondere auf der Unterlegeinheit, aufgestelltes Gargeschirr anhand einer Gewichtskraft des Gargeschirrs zu detektieren. Alternativ oder zusätzlich könnte die Gargeschirrerkennungseinheit zumindest einen Beschleunigungssensor und/oder Dehnungssensor aufweisen, welcher insbesondere dazu vorgesehen sein könnte, eine Verformung einer zu einem Aufstellen des Gargeschirrs vorgesehenen Oberfläche der Unterlegeinheit insbesondere in einer Vertikalrichtung zu detektieren. Die Gargeschirrerkennungseinheit könnte insbesondere dazu vorgesehen sein, aus der Detektion der Verformung der zu einem Aufstellen des Gargeschirrs vorgesehenen Oberfläche der Unterlegeinheit in der Vertikalrichtung aufgestelltes Gargeschirr zu detektieren. Die Vertikalrichtung ist insbesondere wenigstens im Wesentlichen senkrecht zu der Aufstellplatte ausgerichtet. Insbesondere ist die Vertikalrichtung wenigstens im Wesentlichen senkrecht zu einem Untergrund ausgerichtet. Der Untergrund könnte beispielsweise ein Boden und/oder ein Fußboden sein. Dadurch kann insbesondere auf eine Kochfeld-Gargeschirrerkennungseinheit verzichtet werden.

Ferner wird vorgeschlagen, dass die Unterlegvorrichtung eine Empfangseinheit aufweist, welche zu einem kontaktlosen Empfang von Energie, insbesondere von elektromagnetischer Energie, vorgesehen ist. Die Empfangseinheit könnte beispielsweise als eine Kommunikationseinheit ausgebildet sein und insbesondere zumindest eine Antenne aufweisen, welche zu dem kontaktlosen Empfang von Energie, insbesondere von elektromagnetischer Energie, vorgesehen sein könnte. Insbesondere könnte die als Kommunikationseinheit ausgebildete Empfangseinheit zumindest einen Sender aufweisen, welcher dazu vorgesehen sein könnte, zumindest eine Information und/oder wenigstens eine Kenngröße an eine dritte Einheit, wie beispielsweise eine Steuereinheit, zu übermitteln. Alternativ oder zusätzlich könnte die Empfangseinheit als eine Energieeinheit ausgebildet sein und insbesondere zumindest eine Spule aufweisen, welche zu dem kontaktlosen Empfang von Energie, insbesondere von elektromagnetischer Energie, vorgesehen sein könnte. Insbesondere ist die Empfangseinheit wenigstens zu einem Großteil in der Unterlegeinheit integriert. Dadurch kann insbesondere eine hohe Flexibilität erreicht werden.

Zudem wird vorgeschlagen, dass die Empfangseinheit zu einer Energieversorgung wenigstens eines Teils der Elektronikeinheit vorgesehen ist. Das Kochfeld weist insbesondere zumindest eine Induktionseinheit auf. Unter einer "Induktionseinheit" soll insbesondere eine Einheit verstanden werden, welche dazu vorgesehen ist, in wenigstens einem Betriebszustand, insbesondere zumindest in dem Heizbetriebszustand, zumindest ein elektromagnetisches Wechselfeld zu einer Energieübertragung bereitzustellen. Die Induktionseinheit ist insbesondere dazu vorgesehen, in wenigstens einem Betriebszustand, insbesondere zumindest in dem Heizbetriebszustand, mittels des elektromagnetischen Wechselfelds in der Empfangseinheit zumindest einen Induktionsstrom zu erzeugen und/oder hervorzurufen. Die Induktionseinheit könnte beispielsweise zumindest ein von einer Heizeinheit verschieden ausgebildetes Energieübertragungselement aufweisen, das insbesondere dazu vorgesehen sein könnte, in wenigstens einem Betriebszustand, insbesondere zumindest in dem Heizbetriebszustand, die Energie für die Empfangseinheit bereitzustellen. Insbesondere könnte das Energieübertragungselement zumindest einen Induktor und/oder zumindest eine Spule aufweisen. Das Energieübertragungselement könnte insbesondere dazu vorgesehen sein, in wenigstens einem Betriebszustand, insbesondere zumindest in dem Heizbetriebszustand, die Energie für die Empfangseinheit zumindest mittels einer induktiven Energieübertragung bereitzustellen. Vorteilhaft ist die Heizeinheit, insbesondere des Kochfelds, Teil der Induktionseinheit und insbesondere als Induktionsheizeinheit ausgebildet. Insbesondere ist die als Induktionsheizeinheit ausgebildete Heizeinheit dazu vorgesehen, in wenigstens einem Betriebszustand, insbesondere zumindest in dem Heizbetriebszustand, die Energie für die Empfangseinheit bereitzustellen. Insbesondere ist die Heizeinheit dazu vorgesehen, in wenigstens einem Betriebszustand, insbesondere zumindest in dem Heizbetriebszustand, insbesondere zusätzlich zu der Bereitstellung von Energie für die Empfangseinheit, zumindest einen Teil des Gargeschirrs, insbesondere zumindest einen Teil eines Bodens des Gargeschirrs, zu erhitzen. Die Empfangseinheit ist insbesondere dazu vorgesehen, in wenigstens einem Betriebszustand, insbesondere zumindest in dem Heizbetriebszustand, vorteilhaft von der Induktionseinheit bereitgestellte, elektromagnetische Energie aufzunehmen. Vorzugsweise ist die Empfangseinheit dazu vorgesehen, mittels der aufgenommenen Energie die Elektronikeinheit wenigstens teilweise, insbesondere wenigstens zu einem Großteil und vorteilhaft komplett zu versorgen. Die Empfangseinheit könnte beispielsweise zu einer induktiven Energieübertragung und/oder zu einer kapazitiven Energieübertragung und/oder zu einer elektromagnetischen Energieübertragung und/oder zu einer Energieübertragung mittels Laser und/oder zu einer Energieübertragung mittels Schall und/oder zu einer Energieübertragung mittels Bluetooth und/oder zu einer Energieübertragung mittels Bluetooth Low Energy vorgesehen sein. Dadurch kann insbesondere eine umweltschonende und/oder energiesparende Ausgestaltung bereitgestellt werden. Insbesondere kann auf eine Verwendung von Akkumulatoren und/oder Batterien verzichtet werden. Insbesondere kann eine preiswerte und/oder einfach ausgestaltete Unterlegvorrichtung ermöglicht werden. Insbesondere kann auf einen Wechsel einer Batterie und/oder eines Akkumulators verzichtet werden, wodurch insbesondere ein hoher Komfort für einen Bediener erreicht werden kann.

In einer weiteren Ausgestaltung wird ein Kochsystem mit zumindest einem Kochfeld, insbesondere mit zumindest dem Kochfeld, mit zumindest einer erfindungsgemäßen Unterlegvorrichtung und mit einer Aufstellplatte vorgeschlagen. Dadurch kann insbesondere eine besonders flexible Ausgestaltung ermöglicht werden.

Beispielsweise könnte die Aufstellplatte eine Kochfeldplatte und insbesondere dazu vorgesehen sein, einen Teil eines Außengehäuses, insbesondere eines Kochfelds, auszubilden. Vorzugsweise ist die Aufstellplatte als eine von einer Kochfeldplatte verschieden ausgebildete Küchenarbeitsplatte ausgebildet. Insbesondere ist das Kochfeld in einer Einbaulage wenigstens zu einem Großteil und vorteilhaft vollständig unterhalb der Aufstellplatte angeordnet. Dadurch kann insbesondere auf eine Kochfeldplatte verzichtet und/oder eine platzsparende Ausgestaltung bereitgestellt werden.

Weiterhin wird vorgeschlagen, dass die Unterlegeinheit zu einer Positionierung an einer beliebigen Stelle auf der Aufstellplatte oberhalb des Kochfelds vorgesehen ist. Dadurch kann die Unterlegeinheit insbesondere in flexibler Art und Weise an einer beliebigen Position auf der Aufstellplatte positioniert werden.

Ferner wird vorgeschlagen, dass das Kochfeld eine Kochfeld-Steuereinheit aufweist, welche dazu vorgesehen ist, eine Beheizung des insbesondere aufgestellten Gargeschirrs nur bei aufgelegter Unterlegeinheit, insbesondere nur bei aufgelegter Unterlegvorrichtung, zu starten. Insbesondere ist die Kochfeld-Steuereinheit zu einer Verwendung mit verschiedenen Unterlegeinheiten, insbesondere mit verschiedenen Unterlegvorrichtungen, vorgesehen, wodurch insbesondere eine einfache kundenspezifische Anpassung und/oder eine modulare Ausgestaltung erzielt werden können/kann. Die Kochfeld-Steuereinheit ist insbesondere dazu vorgesehen, eine Beheizung nur im Fall einer Positionierung der Unterlegeinheit auf der Kochfläche und insbesondere zusätzlich nur im Fall eines Aufstellens eines Gargeschirrs auf der Unterlegeinheit zu starten. Dadurch kann insbesondere eine Beschädigung der Aufstellplatte, insbesondere einer Oberfläche der Aufstellplatte, vermieden und/oder eine langlebige Ausgestaltung erzielt werden, wodurch die Aufstellplatte insbesondere wenigstens zu einem Großteil aus zumindest einem hochwertigen Material bestehen kann. Alterserscheinungen der Aufstellplatte und damit verbunden ein Austausch der Aufstellplatte können insbesondere vermieden werden. Insbesondere kann eine hohe Sicherheit gewährleistet werden.

Die Unterlegvorrichtung soll hierbei nicht auf die oben beschriebene Anwendung und Ausführungsform beschränkt sein. Insbesondere kann die Unterlegvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Kochsystem mit einem Kochfeld, mit einer Arbeitsplatte, mit drei Unterlegvorrichtungen und drei Gargeschirre in einer schematischen Draufsicht,
- Fig. 2: eine Unterlegvorrichtung der Unterlegvorrichtungen in einer schematischen Draufsicht, wobei ein Teil einer Unterlegeinheit der Unterlegvorrichtung nicht dargestellt ist, um eine Einsicht in einen Hohlraum der Unterlegeinheit zu ermöglichen,
- Fig. 3: die Unterlegvorrichtung in einer schematischen Seitenansicht und
- Fig. 4: die Unterlegvorrichtung und ein Gargeschirr der Gargeschirre in einer schematischen perspektivischen Darstellung.

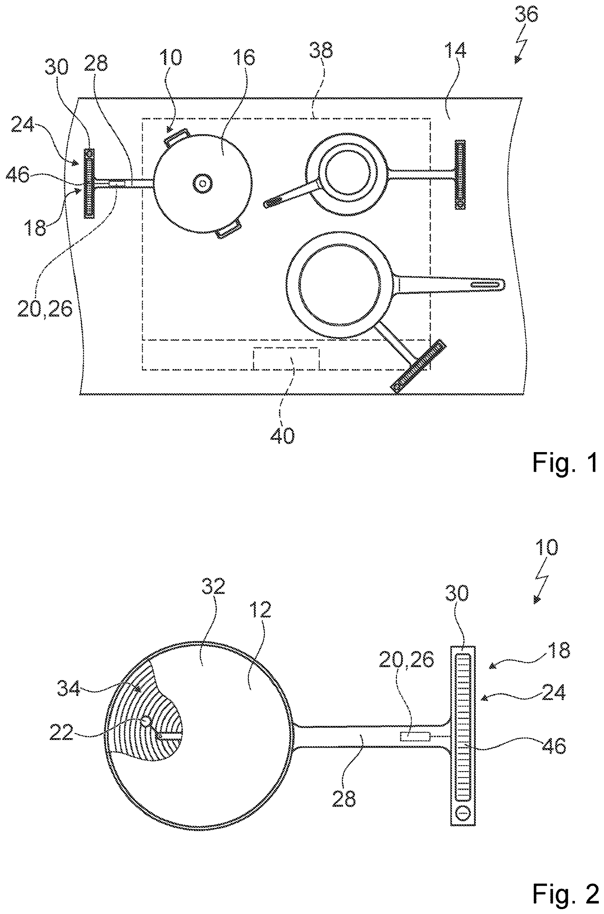

Fig. 1 zeigt ein Kochsystem 36 mit einem Kochfeld 38 und mit drei Unterlegvorrichtungen 10. Von mehrfach vorhandenen Objekten ist in den Figuren jeweils lediglich eines mit einem Bezugszeichen versehen. Von den Unterlegvorrichtungen 10 wird im Folgenden lediglich eine beschrieben.

Das Kochsystem 36 weist eine Aufstellplatte 14 auf. In einem montierten Zustand ist das Kochfeld 38 unterhalb der Aufstellplatte 14 angeordnet. Das Kochfeld 38 ist im vorliegenden Ausführungsbeispiel frei von einer Kochfeldplatte. Die Aufstellplatte 14 ist als eine von einer Kochfeldplatte verschieden ausgebildete Küchenarbeitsplatte ausgebildet.

Das Kochfeld 38 weist mehrere Heizeinheiten (nicht dargestellt) auf. Die Heizeinheiten sind in Form einer Matrix angeordnet. Die Heizeinheiten definieren einen variablen Kochflächenbereich. Die Heizeinheiten sind als Induktionsheizeinheiten ausgebildet. Ein Oberflächenbereich der Aufstellplatte 14, unterhalb welchem das Kochfeld 38 angeordnet ist, definiert eine Kochfläche.

Das Kochsystem 36 weist eine Kochfeld-Steuereinheit 40 auf. In dem montierten Zustand ist die Kochfeld-Steuereinheit 40 unterhalb der Aufstellplatte 14 angeordnet. Die Kochfeld-Steuereinheit 40 regelt in einem Heizbetriebszustand eine Energiezufuhr zu den Heizeinheiten des Kochfelds 38.

Die Aufstellplatte 14 ist zu einem Auflegen der Unterlegvorrichtung 10 vorgesehen. In einem Heizbetriebszustand ist die Unterlegvorrichtung 10 teilweise zwischen der Aufstellplatte 14 und einem beheizten Gargeschirr 16 angeordnet. Die Unterlegvorrichtung 10 weist eine Unterlegeinheit 12 auf (vgl. Fig. 2 bis 4). Die Unterlegeinheit 12 ist in dem Heizbetriebszustand zu einem Großteil zwischen der Aufstellplatte 14 und einem beheizten Gargeschirr 16 angeordnet.

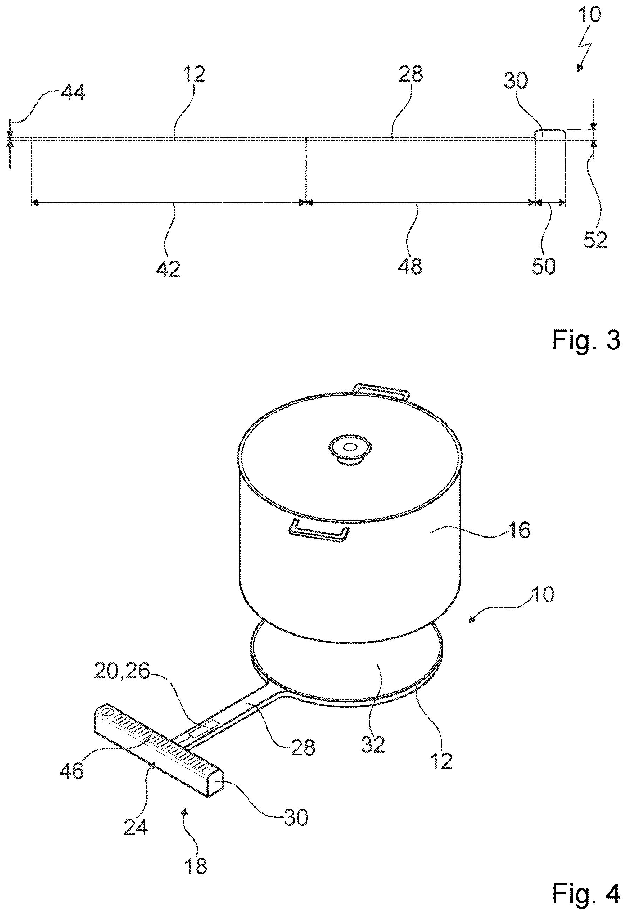

Die Unterlegeinheit 12 verhindert in dem Heizbetriebszustand eine Übertragung von Wärme von dem Gargeschirr 16 auf die Aufstellplatte 14 im Wesentlichen. Die Unterlegeinheit 12 weist eine im Wesentlichen scheibenförmige Gestalt auf. Im vorliegenden Ausführungsbeispiel weist die Unterlegeinheit 12 einen Durchmesser 42 von im Wesentlichen 180 mm auf (vgl. Fig. 3). Die Unterlegeinheit 12 weist eine Dicke 44 von im Wesentlichen 2 mm auf.

Die Unterlegeinheit 12 besteht zu einem Großteil aus einem im Wesentlichen flexiblen Material. Das Material, aus welchem die Unterlegeinheit 12 zu einem Großteil besteht, weist eine geringe Wärmeleitfähigkeit auf. Insbesondere ist das Material, aus welchem die Unterlegeinheit zu einem Großteil besteht, im Wesentlichen isolierend und/oder im Wesentlichen einfach zu reinigen. Im vorliegenden Ausführungsbeispiel besteht die Unterlegeinheit 12 zu einem Großteil aus Silikon.

Die Unterlegvorrichtung 10 weist eine Elektronikeinheit 18 auf (vgl. Fig. 1 bis 4). Die Elektronikeinheit 18 stellt in einem Betriebszustand eine Funktion bereit. Vor einem Beginn des Heizbetriebszustands stellt die Elektronikeinheit 18 in dem Betriebszustand mehrere Funktionen bereit.

Die Elektronikeinheit 18 weist eine Positionierungseinheit 20 auf (vgl. Fig. 1, 2 und 4). Die Positionierungseinheit 20 detektiert eine Position der Unterlegeinheit 12 auf der Aufstellplatte 14 im Wesentlichen. Im vorliegenden Ausführungsbeispiel weist die Positionierungseinheit 20 einen Beschleunigungssensor (nicht dargestellt) auf. Der Beschleunigungssensor ist auf die Ausmaße des Kochfelds 38 kalibriert.

Im vorliegenden Ausführungsbeispiel ist die Positionierungseinheit 20 teilweise einstückig mit einer Steuereinheit 26 der Elektronikeinheit 18 ausgebildet. Die Elektronikeinheit 18 weist die Steuereinheit 26 auf. Die Steuereinheit 26 steuert in dem Betriebszustand und in dem Heizbetriebszustand die Kochfeld-Steuereinheit 40.

Die Elektronikeinheit 18 weist eine Gargeschirrerkennungseinheit 32 auf (vgl. Fig. 1, 2 und 4). Die Gargeschirrerkennungseinheit 32 ist im vorliegenden Ausführungsbeispiel teilweise einstückig mit der Unterlegeinheit 12 ausgebildet. In dem Betriebszustand detektiert die Gargeschirrerkennungseinheit 32 auf der Unterlegeinheit 12 aufgestelltes Gargeschirr 16. Die Gargeschirrerkennungseinheit 32 detektiert in dem Betriebszustand eine Verformung einer zu einem Aufstellen des Gargeschirrs 16 vorgesehenen Oberfläche der Unterlegeinheit 12.

Die Unterlegeinheit 12 ist zu einer Positionierung an einer beliebigen Stelle auf der Aufstellplatte 14 oberhalb des Kochfelds 38 vorgesehen. Die Elektronikeinheit 18 gibt im Fall einer Fehl-Positionierung der Unterlegeinheit 12 ein Warnsignal an einen Bediener aus. Die Kochfeld-Steuereinheit 40 startet in Abhängigkeit einer Ansteuerung durch die Steuereinheit 26 eine Beheizung des aufgestellten Gargeschirrs 16 nur bei aufgelegter Unterlegeinheit 12. Durch einen Start der Beheizung des aufgestellten Gargeschirrs 16 startet die Kochfeld-Steuereinheit 40 den Heizbetriebszustand.

Die Elektronikeinheit 18 weist einen Temperatursensor 22 auf (vgl. Fig. 2). Der Temperatursensor 22 ist zu einem Großteil innerhalb der Unterlegeinheit 12 angeordnet. In dem Heizbetriebszustand detektiert der Temperatursensor 22 eine Temperatur des Gargeschirrs 16. In dem Heizbetriebszustand und in dem Betriebszustand stellt die Elektronikeinheit 18 mehrere Funktionen bereit.

Die Elektronikeinheit 18 weist eine Bedieneinheit 24 auf (vgl. Fig. 1, 2 und 4). In dem Betriebszustand ist die Bedieneinheit 24 zu einer Bedieneingabe von Betriebsparametern vorgesehen. Die Unterlegvorrichtung 10 weist ein Bedienelement 46 zu einer Eingabe von Betriebsparametern auf. Das Bedienelement 46 ist als ein Touch-Slider ausgebildet.

Die Steuereinheit 26 steuert und/oder regelt in Abhängigkeit von der Bedieneingabe in dem Heizbetriebszustand einen in dem Gargeschirr 16 stattfindenden Garprozess. Im vorliegenden Ausführungsbeispiel ist die Steuereinheit 26 zu einem Großteil innerhalb eines Abstandselements 28 angeordnet (vgl. Fig. 1 bis 4).

Die Unterlegvorrichtung 10 weist das Abstandselement 28 auf (vgl. Fig. 1 bis 4). Das Abstandselement 28 ist einstückig mit der Unterlegeinheit 12 verbunden. Das Abstandselement 28 beabstandet die Bedieneinheit 24 von der Unterlegeinheit 12. Im vorliegenden Ausführungsbeispiel weist das Abstandselement 28 eine Längserstreckung 48 von im Wesentlichen 150 mm auf. Eine Dicke des Abstandselements 28 entspricht im Wesentlichen der Dicke 44 der Unterlegeinheit 12. Die Bedieneinheit 24 ist an einem der Unterlegeinheit 12 abgewandten Ende des Abstandselements 28 angeordnet.

An dem der Unterlegeinheit 12 abgewandten Ende des Abstandselements 28 ist eine Griffeinheit 30 angeordnet. Die Unterlegvorrichtung 10 weist die Griffeinheit 30 auf (vgl. Fig. 1 bis 4). Die Bedieneinheit 24 ist zu einem Großteil innerhalb der Griffeinheit 30 angeordnet. Die Griffeinheit 30 ist einstückig mit dem Abstandselement 28 verbunden. Über das Abstandselement 28 ist die Griffeinheit 30 einstückig mit der Unterlegeinheit 12 verbunden.

Im vorliegenden Ausführungsbeispiel weist die Griffeinheit 30 eine Quererstreckung 50 von im Wesentlichen 20 mm auf (vgl. Fig. 3). Die Griffeinheit 30 weist eine Dicke 52 von im Wesentlichen 7 mm auf.

Die Unterlegvorrichtung 10 weist eine Empfangseinheit 34 auf (vgl. Fig. 2). Die Empfangseinheit 34 ist zu einem kontaktlosen Empfang von Energie vorgesehen. In dem Betriebszustand empfängt die Empfangseinheit 34 kontaktlos Energie von dem Kochfeld 38.

Die Empfangseinheit 34 empfängt in dem Heizbetriebszustand kontaktlos Energie von den Heizeinheiten. In dem Betriebszustand empfängt die Empfangseinheit 34 kontaktlos Energie von einem Energieübertragungselement (nicht dargestellt) einer Induktionseinheit (nicht dargestellt) des Kochfelds 38. Zu dem kontaktlosen Empfang von Energie weist die Empfangseinheit 34 eine Spule auf.

Mit der empfangenen Energie versorgt die Empfangseinheit 34 die Elektronikeinheit 18 im Wesentlichen. Die Empfangseinheit 34 ist zu einer Energieversorgung der Elektronikeinheit 18 vorgesehen.

### Bezugszeichen

- 10: Unterlegvorrichtung
- 12: Unterlegeinheit
- 14: Aufstellplatte
- 16: Gargeschirr
- 18: Elektronikeinheit
- 20: Positionierungseinheit
- 22: Temperatursensor
- 24: Bedieneinheit
- 26: Steuereinheit
- 28: Abstandselement
- 30: Griffeinheit
- 32: Gargeschirrerkennungseinheit
- 34: Empfangseinheit
- 36: Kochsystem
- 38: Kochfeld
- 40: Kochfeld-Steuereinheit
- 42: Durchmesser
- 44: Dicke
- 46: Bedienelement
- 48: Längserstreckung
- 50: Quererstreckung
- 52: Dicke

## Patentansprüche

1. Unterlegvorrichtung mit zumindest einer Unterlegeinheit (12), welche dazu vorgesehen ist, in wenigstens einem Heizbetriebszustand zwischen einer Aufstellplatte (14) und einem beheizten Gargeschirr (16) wenigstens teilweise angeordnet zu sein, und mit einer Elektronikeinheit (18), welche dazu vorgesehen ist, in wenigstens einem Betriebszustand zumindest eine Funktion bereitzustellen, wobei die Elektronikeinheit (18) zumindest eine Positionierungseinheit (20) aufweist, welche dazu vorgesehen ist, zumindest eine Position der Unterlegeinheit (12) auf der Aufstellplatte (14) zu detektieren, **dadurch gekennzeichnet, dass** die Elektronikeinheit (18) eine Gargeschirrerkennungseinheit (32) aufweist, welche dazu vorgesehen ist, auf der Unterlegeinheit (12) aufgestelltes Gargeschirr (16) zu detektieren.

2. Unterlegvorrichtung nach Anspruch 1, **dadurch gekennzeichnet, dass** die Unterlegeinheit (12) dazu vorgesehen ist, in dem Heizbetriebszustand eine Übertragung von Wärme von dem Gargeschirr (16) auf die Aufstellplatte (14) wenigstens im Wesentlichen zu verhindern.

3. Unterlegvorrichtung nach Anspruch 1 oder 2, **dadurch gekennzeichnet, dass** die Unterlegeinheit (12) wenigstens zu einem Großteil aus einem im Wesentlichen flexiblen Material besteht.

4. Unterlegvorrichtung nach einem der vorhergehenden Ansprüche, **dadurch gekennzeichnet, dass** die Elektronikeinheit (18) zumindest einen Temperatursensor (22) aufweist, welcher dazu vorgesehen ist, in dem Heizbetriebszustand zumindest eine Temperatur des Gargeschirrs (16) zu detektieren.

5. Unterlegvorrichtung nach einem der vorhergehenden Ansprüche, **dadurch gekennzeichnet, dass** die Elektronikeinheit (18) zumindest eine Bedieneinheit (24) aufweist, welche zu einer Bedieneingabe von zumindest einem Betriebsparameter vorgesehen ist.

6. Unterlegvorrichtung nach Anspruch 5, **dadurch gekennzeichnet, dass** die Elektronikeinheit (18) eine Steuereinheit (26) aufweist, welche dazu vorgesehen ist, in Abhängigkeit von der Bedieneingabe in dem Heizbetriebszustand wenigstens einen Garprozess zu steuern und/oder zu regeln.

7. Unterlegvorrichtung nach Anspruch 5 oder 6, **gekennzeichnet durch** zumindest ein Abstandselement (28), welches dazu vorgesehen ist, die Bedieneinheit (24) von der Unterlegeinheit (12) zu beabstanden.

8. Unterlegvorrichtung nach einem der vorhergehenden Ansprüche, **gekennzeichnet durch** eine Griffeinheit (30), welche mit der Unterlegeinheit (12) verbunden ist.

9. Unterlegvorrichtung nach einem der vorhergehenden Ansprüche, **gekennzeichnet durch** eine Empfangseinheit (34), welche zu einem kontaktlosen Empfang von Energie vorgesehen ist.

10. Unterlegvorrichtung nach Anspruch 9, **dadurch gekennzeichnet, dass** die Empfangseinheit (34) zu einer Energieversorgung wenigstens eines Teils der Elektronikeinheit (18) vorgesehen ist.

11. Kochsystem mit zumindest einem Kochfeld (38), mit zumindest einer Unterlegvorrichtung (10) nach einem der vorhergehenden Ansprüche und mit einer Aufstellplatte (14).

12. Kochsystem nach Anspruch 11, **dadurch gekennzeichnet, dass** die Aufstellplatte (14) als eine von einer Kochfeldplatte verschieden ausgebildete Küchenarbeitsplatte ausgebildet ist.

13. Kochsystem nach Anspruch 11 oder 12, **dadurch gekennzeichnet, dass** die Unterlegeinheit (12) zu einer Positionierung an einer beliebigen Stelle auf der Aufstellplatte (14) oberhalb des Kochfelds (38) vorgesehen ist.

## Claims

1. Pad device comprising at least one pad unit (12) that is provided in order to be placed at least in part between a setting-down counter (14) and a heated cooking vessel (16) in at least one heating operating mode, and comprising an electronic unit (18) which is provided in order to supply at least one function in at least one operating mode, wherein the electronic unit (18) has at least one positioning unit (20), which is provided in order to detect at least one position of the pad unit (12) on the setting-down counter (14), **characterised in that** the electronic unit (18) has a cooking vessel recognition unit (32) which is provided in order to detect cooking vessels (16) set down on the pad unit (12).

2. Pad device according to claim 1, **characterised in that** the pad unit (12) is provided in order to prevent at least in essence a transfer of heat from the cooking vessel (16) to the setting-down counter (14) in the heating operating mode.

3. Pad device according to claim 1 or 2, **characterised in that** the pad unit (12) consists at least to a large degree of an essentially flexible material.

4. Pad device according to one of the preceding claims, **characterised in that** the electronic unit (18) has at least one temperature sensor (22) which is provided in order to detect at least one temperature of the cooking vessel (16) in the heating operating mode.

5. Pad device according to one of the preceding claims, **characterised in that** the electronic unit (18) has at least one operating unit (24) which is provided for an operating input of at least one operating parameter.

6. Pad device according to claim 5, **characterised in that** the electronic unit (18) has a control unit (26) which is provided in order to control and/or regulate at least one cooking process in the heating operating mode depending on the operating input.

7. Pad device according to claim 5 or 6, **characterised by** at least one spacer element (28) which is provided in order to space the operating unit (24) away from the pad unit (12).

8. Pad device according to one of the preceding claims, **characterised by** a handle unit (30) which is connected to the pad unit (12).

9. Pad device according to one of the preceding claims, **characterised by** a receiver unit (34) which is provided for receiving energy contactlessly.

10. Pad device according to claim 9, **characterised in that** the receiver unit (34) is provided for an energy supply to at least part of the electronic unit (18).

11. Cooking system with at least one stovetop (38), with at least one pad device (10) according to one of the preceding claims, and with a setting-down counter (14).

12. Cooking system according to claim 11, **characterised in that** the setting-down counter (14) is realized in the form of a kitchen countertop that is realized differently from a stovetop plate.

13. Cooking system according to claim 11 or 12, **characterised in that** the pad unit (12) is provided for a positioning at any required point on the setting-down counter (14) above the stovetop (38).

## Revendications

1. Dispositif sous-plat avec au moins une unité de sous-plat (12), laquelle est prévue pour être au moins en partie agencée dans au moins un état de fonctionnement de chauffe entre une plaque de pose (14) et un récipient de cuisson (16) chauffé, et avec une unité électronique (18) laquelle est prévue pour procurer, dans au moins un état de fonctionnement, au moins une fonction, dans lequel l'unité électronique (18) comporte au moins une unité de positionnement (20) prévue pour détecter au moins une position de l'unité de sous-plat (12) sur la plaque de pose (14), **caractérisé en ce que** l'unité électronique (18) comporte une unité de détection de récipient de cuisson (32), laquelle est prévue pour détecter un récipient de cuisson (16) posé sur l'unité de sous-plat (12).

2. Dispositif sous-plat selon la revendication 1, **caractérisé en ce que** l'unité de sous-plat (12) est prévue pour empêcher au moins en grande partie, à l'état de fonctionnement de chauffe, une transmission de la chaleur du récipient de cuisson (16) à la plaque de pose (14).

3. Dispositif sous-plat selon la revendication 1 ou 2, **caractérisé en ce que** l'unité de sous-plat (12) est constituée au moins en grande partie d'une matière essentiellement flexible.

4. Dispositif sous-plat selon l'une des revendications précédentes, **caractérisé en ce que** l'unité électronique (18) comporte au moins un détecteur de température (22) prévu pour détecter, à l'état de fonctionnement de chauffe, au moins une température du récipient de cuisson (16).

5. Dispositif sous-plat selon l'une des revendications précédentes, **caractérisé en ce que** l'unité électronique (18) comporte au moins une unité de commande (24) prévue pour entrer une commande d'au moins un paramètre de fonctionnement.

6. Dispositif sous-plat selon la revendication 5, **caractérisé en ce que** l'unité électronique (18) comporte une unité de commande (26) prévue pour commander et/ou régler, en fonction de l'entrée de commande dans l'état de fonctionnement de chauffe, au moins un processus de cuisson.

7. Dispositif sous-plat selon la revendication 5 ou 6, **caractérisé par** au moins un élément écarteur (28) prévu pour écarter l'unité de commande (24) de l'unité de sous-plat (12).

8. Dispositif sous-plat selon l'une des revendications précédentes, **caractérisé par** une unité de préhension (30) raccordée à l'unité de sous-plat (12).

9. Dispositif sous-plat selon l'une des revendications précédentes, **caractérisé par** une unité réceptrice (34) prévue pour une réception d'énergie sans contact.

10. Dispositif sous-plat selon la revendication 9, **caractérisé en ce que** l'unité réceptrice (34) est prévue pour l'alimentation en énergie d'au moins une partie de l'unité électronique (18).

11. Système de cuisson avec au moins une table de cuisson (38) avec au moins un dispositif sous-plat (10) selon l'une des revendications précédentes et avec une plaque de pose (14).

12. Système de cuisson selon la revendication 11, **caractérisé en ce que** la plaque de pose (14) est réalisée comme un plan de travail de cuisson réalisé différemment d'une plaque de table de cuisson.

13. Système de cuisson selon la revendication 11 ou 12, **caractérisé en ce que** l'unité de sous-plat (12) est prévue pour un positionnement en un point quelconque sur la plaque de pose (14) au-dessus de la table de cuisson (38).
